# EUROPEAN PATENT SPECIFICATION

(11) **EP 1 394 005 B1**
(45) Date of publication and mention of the grant of the patent: **04.05.2005**
(21) Application number: 03255428.9
(22) Date of filing: 29.08.2003
(51) Int. Cl.: B60R 25/02

(54) **Vehicle anti-theft device**
Diebstahlsicherungsvorrichtung für Kraftfahrzeuge
Dispositif anti-vol pour véhicule

(30) Priority: 30.08.2002 GB 0220147
(43) Date of publication of application: 03.03.2004
(73) Proprietor: Somerfield, Alan David, Seal Beach, CA 90740 (US)
(72) Inventor: Somerfield, Alan David, Seal Beach, CA 90740 (US)
(74) Representative: Beresford, Keith Denis Lewis

(56) References cited:
- WO-A-96/20099
- US-A- 5 619 873
- US-A- 5 855 128
- US-B1- 6 430 978

## Description

The present invention concerns vehicle anti-theft devices.

There are many known devices designed to be fitted to the vehicle steering wheels in order to prevent unauthorised use thereof by means of a protruding bar which jams against the vehicle structure when the wheel is turned.

The ingenuity of car thieves and the portability of affordable tools have placed tougher and tougher demands on the security of these devices. This has driven the devices to become ever more heavy, unwieldy and complex in order to withstand attack. Unfortunately the result of this is that the devices become less widely used and the original aim of reducing car crime is undermined.

Another factor is the steering wheel itself. They are by the very nature of car production removable from the steering column if the 'wheel nut' is accessible. A thief can merely remove the wheel with the lock attached and fasten a pair of grips to the steering column and drive away.

Furthermore steering wheels are designed to crumple in the event of an accident and this has resulted in a degree of softness and flexibility which may be exploited by the thief to help remove the device from the wheel.

In the light of this, it is believed that the best way to provide top level security via a steering wheel lock is to both cover and support the entire wheel. Such an idea is not new as can be seen in French Patent Specification Fr 919,367 (1947) where two semicircular covers enclose the wheel and are free to spin thereon. This is also seen in European Patent Specification No. EP 0 690 800 B1.

US-A-5,619,873, which corresponds to the preamble of claim 1, describes a device in which a plurality of sector-shaped housing parts are pivotally joined together about a common axis, and are movable in a fan-like manner to form a circular housing for a steering wheel.

The present invention re-examines the importance of ease of use and how it may be balanced against the ever-increasing demands for security.

In accordance with the present invention there is provided a vehicle anti-theft device as set out in claim 1.

An embodiment of the invention will now be described with reference to the following figures where:
Figure 1 shows a front isometric view of a vehicle anti-theft device according to the present invention fitted to a steering wheel;
Figure 2 shows a rear isometric view of the device fitted to a steering wheel;
Figure 3 shows a cross-sectional view through the plane of the wheel;
Figures. 4 and 5 show the device during removal; and
Figure 6 shows the device in the stowed position.

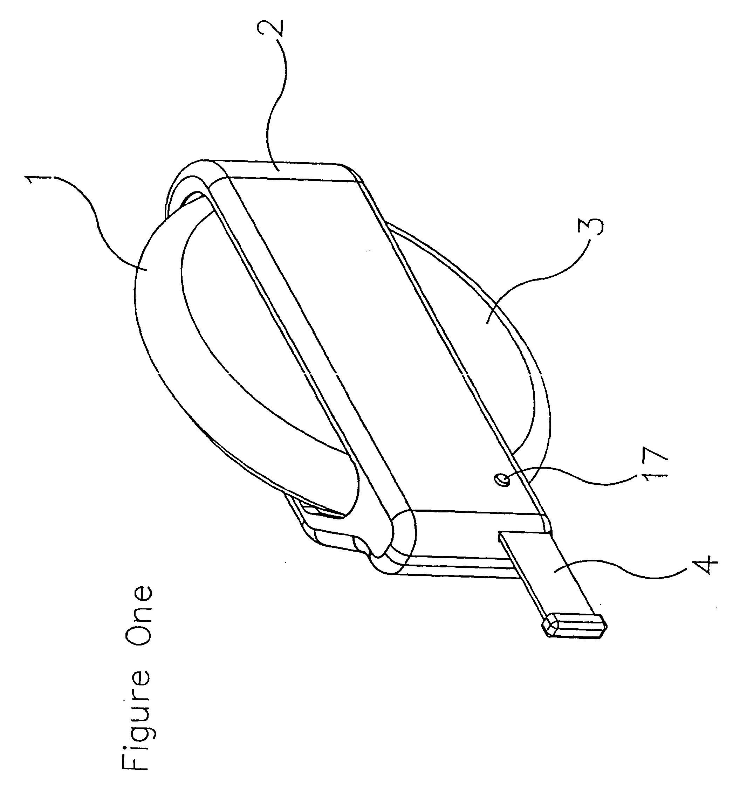

The device comprises an upper arcuate member or segment 1, a housing 2, a lower arcuate member or segment 3 and a bar 4. The housing 2 is substantially rectangular with its upper and lower sides having respective openings through which the upper and lower segments project, as shown in Figures 1, 2 and 3, when the device is in place on a steering wheel. These Figures also show the device fitted on the wheel with the bar extending generally radially such that if the device were rotated the bar would hit the vehicle structure.

The lower portions of the upper and lower segments are retained within the housing 2 so that the entire front face of the wheel is covered.

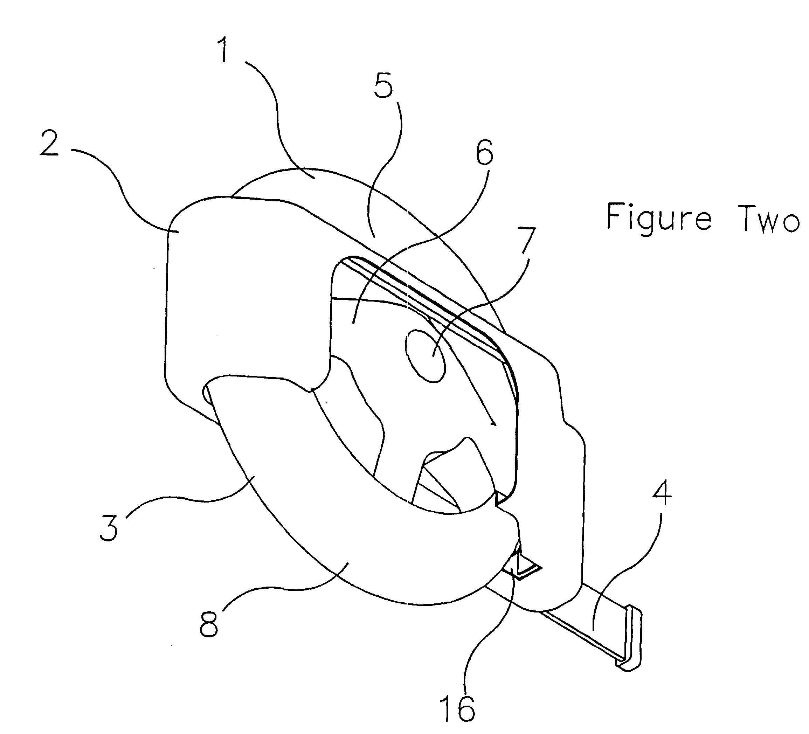

Figure 2 shows a rear isometric view of Figure 1 and shows how the rear face 5 of segment 1 completely closes that portion of the steering wheel which extends beyond the housing 2. The rear of housing 2 is partially cut away at 6 to allow the steering column 7 to pass through. An annular retaining lip 8 is formed around the rear of segment 3 to substantially enclose and retain the lower portion of the wheel rim.

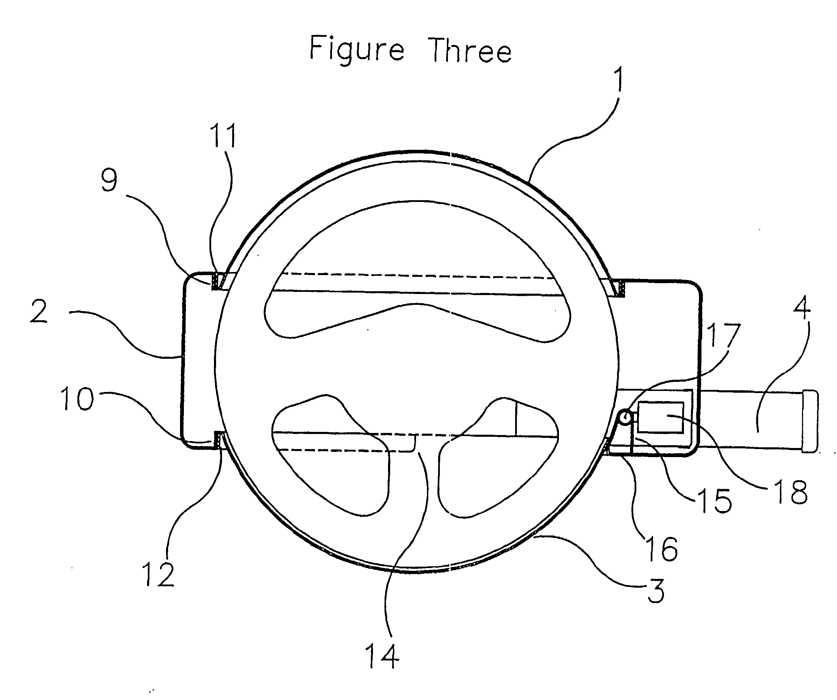

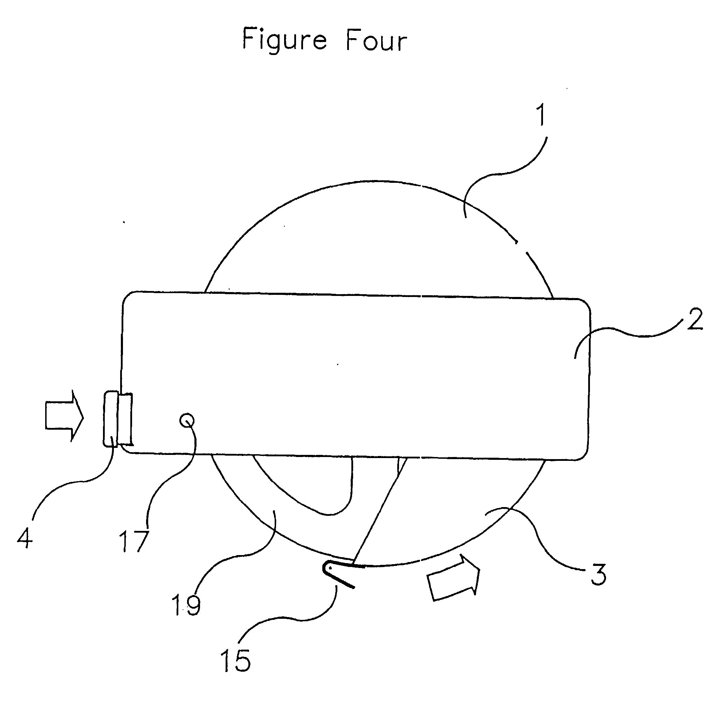

Figure 3 shows a rear cross-sectional view of the mounted anti-theft device. It can be seen that the upper and lower segments 1,3 are retained within the housing 2 by means of return flanges 9 and 10 which hook under opposing return flanges 11 and 12 on the housing 2. In the present embodiment the upper segment 1 is free to move upwards and downwards within the housing 2 and is moved to the operative position shown in Figure 4, for example, when the device is mounted on a steering wheel by being lowered over the upper half of the steering wheel.

The upper segment is retained within the housing 2 all by return flange 11 located around its perimeter. However the return flange 12 on the lower segment is relieved over the half nearest the bar 4 as can be seen at 14. This is so the lower segment is free to rotate as described later. In its mounted state this segment is retained in the housing by hook 15 which passes through aperture 16 (also seen in Figure 2) in the housing 2 and is held by a locking pin 17. The locking pin 17 passes perpendicularly through the housing 2, bar 4, hook 15 and is locked into the housing by a proprietary lock 18 itself fixed to the housing 2. The lock 18 can be a bolt lock engaging in an appropriate recess in the locking pin 17.

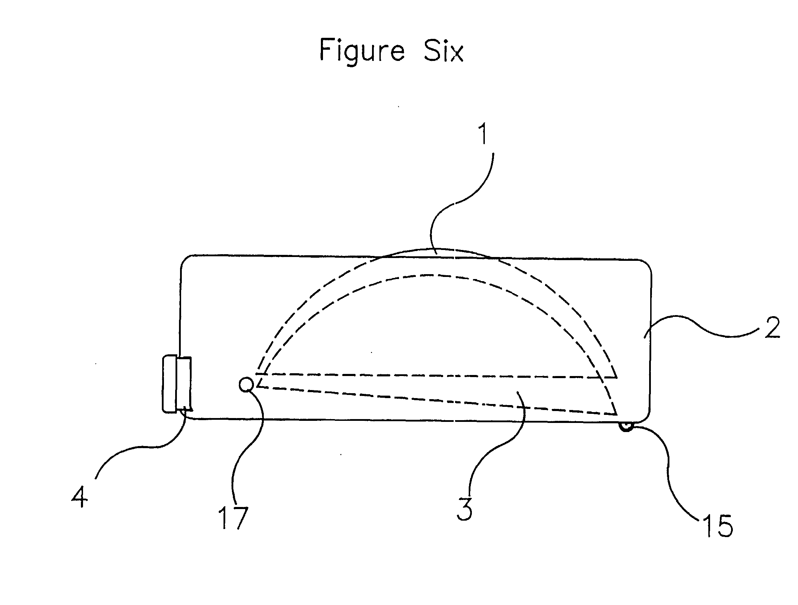

It can be seen in Figure 4 that when the lock 18 is undone and the locking pin 17 withdrawn the lower segment 3 is free to rotate around the axis of the wheel independently of the housing and upper segment. Figure 4 shows how when unlocked the lower segment can be rotated up to its nested or stowed position to expose the lower portion of the steering wheel 19. It should be noted that in this embodiment the general internal dimensions of the upper segment are larger than those of the lower segment so that the lower segment may nest within the upper segment 1 when it moves into the inoperative or folded condition of the anti-theft device as shown in Figure 6. However an alternative embodiment allows the lower segment 3 to nest outside segment 1 as this helps prevent the segments rubbing on the wheel rim.

Also when the locking pin is removed the bar 4 may be retracted within the housing for storage as shown by the adjacent arrow.

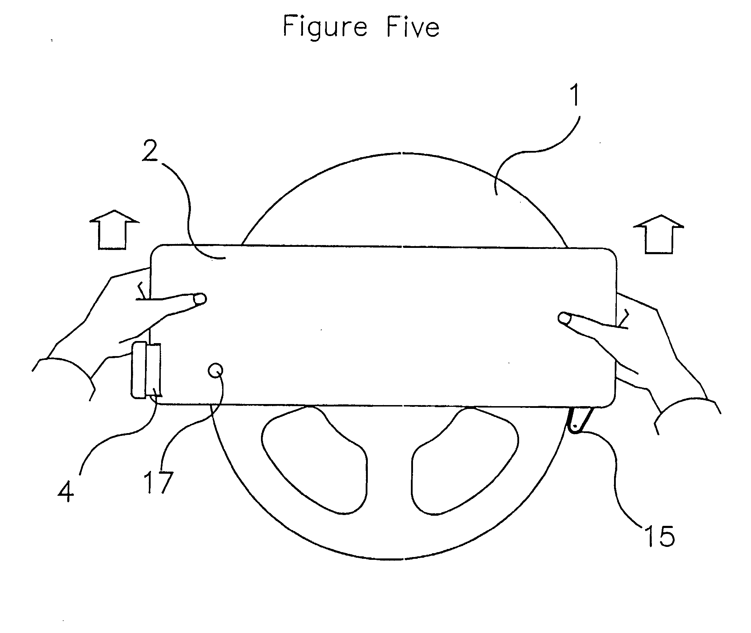

With the lower segment 3 thus fully rotated into the folded condition shown in Figure 5 the device can be placed over the upper portion of the wheel. However by grasping the housing at either end and lifting the entire device may be lifted off the wheel as shown.

As the device is lifted (Figure 6) the lower segment is allowed to drop and rotate about hook 15 and the upper segment 1 also drops vertically within the housing 2 such that when the device is removed from the wheel the lower segment can be pushed back into the rested position so that the entire device has conveniently collapsed to about one third of its original size. The position of the segments 1 and 3 are shown within the housing by the broken lines.

Fitting is basically the reverse of the removal procedure.

Generally construction should be of a material that resists attack such as mild or carbon steel. Finish throughout should prevent damage either to the wheel itself or the interior of the vehicle.

## Claims

1. A vehicle anti-theft device comprising:
(a) a housing (2);
(b) a first segment member (1) for protecting the steering wheel of a vehicle, the first segment member being movable to operative position in which it protrudes from the housing so that said first segment member can enclose a part of the rim of the steering wheel;
(c) a bar (4) movable between a stowed position within the housing and an operative position in which it protrudes beyond the housing so as to provide an obstacle to rotation of the steering wheel to which the device is mounted, and
(d) a lock (17, 18) for locking the bar in its operative position,
and **characterised in that** the device comprises a second segment member 3 for protecting the steering wheel of a vehicle, the segment members (1, 3) being movable to operative positions in which they protrude from the housing in opposite directions so that each segment member can enclose a part of the rim of the steering wheel; and **in that** in a stowed state of the device the two segment members are retained within the housing (2) with the second segment (3) member nested within the first (1);
the first segment member (1) being movable substantially radially with respect to its axis from its stowed position to its operative position as the device is placed over the steering wheel, whilst the second segment member (3) is movable in a circumferential direction around the rim of the steering wheel from its stowed to its operative position so that the combination of the housing and the protruding segment members will enclose, from a driver's viewpoint, an entire steering wheel on which the device is mounted.

2. A device according to claim 1, wherein each segment member is provided with a retaining flange (9, 10) engageable with the housing to prevent the segment member from moving totally outside the housing.

3. A device according to claim 1, wherein the housing member is substantially rectangular and the two segment members are each less than a semicircle whereby coverage of a steering wheel by the device when the device is mounted is provided by one segment member extending beyond and being held by its engagement with one edge of the housing member, by the housing member itself, and by the other segment member extending beyond an opposite edge of the housing member and being held by engagement with the said opposite edge of the opening of the housing member through which it extends.

4. A device according to any one of claims 1 to 3, further comprising a bolt (17) movable to an operative position to prevent retraction of the bar into its stowed position, and wherein the lock (18) is adapted to lock the bolt (17) in its operative position.

5. A device according to claim 4, wherein the bolt is also adapted to restrain movement of the second segment member from its operative position.

6. A device according to either of claims 4 or 5, wherein the second segment member has at one end a hook (15) adapted to pass through an opening (16) in the housing (2), and which is adapted to engage the bolt (17) when the latter is preventing retraction of the bar so as to restrain movement of the second segment member (3).

## Patentansprüche

1. Gerät gegen Fahrzeugdiebstahl, umfassend:
(a) ein Gehäuse (2);
(b) ein erstes Abschnittselement (1) zum Schützen des Lenkrads eines Fahrzeugs, wobei das erste Abschnittselement in eine Betriebsstellung bewegbar ist, in der es aus dem Gehäuse hervorragt, so daß es einen Teil der Kante des Lenkrads einfassen kann;
(c) eine Stange (4), die bewegbar ist zwischen einer eingezogenen Stellung innerhalb des Gehäuses und einer Betriebsstellung, in der sie über das Gehäuse hinausragt und damit ein Hindernis zur Drehung des Lenkrads, an das das Gerät befestigt ist, bildet, und
(d) ein Schloß (17, 18) zum Verschließen der Stange in ihrer Betriebsstellung,
**dadurch gekennzeichnet, daß** das Gerät ein zweites Abschnittselement (3) zum Schützen des Lenkrads eines Fahrzeugs umfaßt, wobei die Abschnittselemente (1, 3) in Betriebsstellungen bewegbar sind, in denen sie aus dem Gehäuse in entgegengesetzte Richtungen herausragen, so daß jedes Abschnittselement einen Teil des Randes des Lenkrads einfassen kann, und dadurch, daß sich die zwei Abschnittselemente in einem eingezogenen Zustand des Geräts innerhalb des Gehäuses (2) befinden, wobei das zweite Abschnittselement (3) innerhalb des ersten (1) steckt;
wobei das erste Abschnittselement (1) in im wesentlichen radialer Richtung bezüglich seiner Achse aus der eingezogenen Stellung in die Betriebsstellung bewegbar ist, wenn das Gerät auf das Lenkrad gesetzt wird, während das zweite Abschnittselement (3) in Umfangsrichtung um die Kante des Lenkrads herum aus seiner eingezogenen Stellung in seine Betriebsstellung bewegbar ist, so daß aus der Sicht eines Fahrers das Gehäuse und die herausragenden Abschnittselemente zusammen ein gesamtes Lenkrad, auf dem das Gerät befestigt ist, einfassen.

2. Gerät nach Anspruch 1, wobei jedes Abschnittselement mit einer Zurückhaltekante (9, 10) versehen ist, die mit dem Gehäuse ineinander greift, um zu verhindern, daß das Abschnittselement sich vollständig aus dem Gehäuse heraus bewegt.

3. Gerät nach Anspruch 1, wobei das Gehäuseelement im wesentlichen rechteckig ist und die zwei Abschnittselemente jeweils weniger als einen Halbkreis bilden, wodurch die Abdeckung eines Lenkrads durch das Gerät, wenn dieses montiert ist, mittels eines Abschnittselements, das sich über eine Kante des Gehäuseelements hinaus erstreckt und durch das Ineinandergreifen mit dieser gehalten wird, mittels des Gehäuseelements selber und mittels des anderen Abschnittselements, das sich über eine entgegengesetzte Kante des Gehäuseelements hinaus erstreckt und durch das Ineinandergreifen der Öffnung des Gehäuseelements, durch das es sich erstreckt, mit der besagten entgegengesetzten Kanten gehalten wird, erfolgt.

4. Gerät nach einem der Ansprüche 1 bis 3, ferner umfassend einen Bolzen (17), der in eine Betriebsstellung bewegbar ist, um ein Zurückziehen der Stange in ihre eingezogene Stellung zu verhindern, wobei das Schloß (18) dazu ausgelegt ist, den Bolzen (17) in seiner Betriebsstellung zu verschließen.

5. Gerät nach Anspruch 4, wobei der Bolzen auch dazu ausgelegt ist, das zweite Abschnittselement davon abzuhalten, sich aus seiner Betriebsstellung zu bewegen.

6. Gerät nach einem der Ansprüche 4 oder 5, wobei das zweite Abschnittselement an einem Ende einen Haken (15) aufweist, der dazu ausgelegt ist, durch eine Öffnung (16) im Gehäuse (2) geführt zu werden und in den Bolzen (17) einzugreifen, wenn letzterer das Zurückziehen der Stange verhindert, um Bewegungen des zweiten Abschnittselements (3) einzuschränken.

## Revendications

1. Dispositif antivol pour véhicule comprenant :
(a) un logement (2) ;
(b) un premier élément du type segment (1) pour protéger le volant de direction d'un véhicule, le premier élément de type segment étant déplaçable vers une position fonctionnelle dans laquelle il dépasse depuis le logement de sorte que ledit premier élément de type segment peut enfermer une partie du pourtour du volant de direction ;
(c) une barre (4) déplaçable entre une position rentrée à l'intérieur du logement et une position fonctionnelle dans laquelle elle dépasse au-delà du logement de façon à procurer un obstacle à la rotation du volant de direction sur lequel le dispositif est monté, et
(d) un verrou (17, 18) pour verrouiller la barre dans sa position fonctionnelle,
et **caractérisé en ce que** le dispositif comprend un second élément de type segment (3) pour protéger le volant de direction d'un véhicule, les éléments de type segment (1, 3) étant déplaçables vers les positions fonctionnelles dans lesquelles ils dépassent depuis le logement vers des directions opposées de sorte que chaque élément de type segment peut renfermer une partie du pourtour du volant de direction ; et **en ce que** dans un état rentré du dispositif, les deux éléments de type segment sont retenus à l'intérieur du logement (2) avec ledit second élément de type segment (3) niché à l'intérieur du premier (1) ;
le premier élément de type segment (1) étant déplaçable sensiblement radialement par rapport à son axe depuis sa position rentrée vers sa position fonctionnelle à mesure que le dispositif est placé sur le volant de direction, tandis que le second élément de type segment (3) est déplaçable dans une direction circonférentielle autour du pourtour du volant de direction depuis sa position rentrée vers sa position fonctionnelle de sorte que la combinaison du logement et des éléments de type segment dépassant renfermeront, du point de vue du conducteur, un volant de direction entier sur lequel le dispositif est monté.

2. Dispositif selon la revendication 1, dans lequel chaque élément de type segment est pourvu d'un flasque de retenue (9, 10) pouvant être mise en prise avec le logement pour empêcher l'élément de type segment de se déplacer totalement à l'extérieur du logement.

3. Dispositif selon la revendication 1, dans lequel l'élément de type logement est sensiblement rectangulaire et les deux éléments de type segment sont chacun moins qu'un demi-cercle dans lequel la couverture du volant de direction par le dispositif, lorsque le dispositif est monté, est assurée par un élément de type segment s'étendant au-delà et étant maintenu par sa mise en prise avec un bord de l'élément de logement, par l'élément de logement lui-même et par l'autre élément de type segment s'étendant au-delà d'un bord opposé de l'élément de type logement et étant maintenu par la mise en prise avec ledit bord opposé de l'ouverture de l'élément de type logement à travers lequel il s'étend.

4. Dispositif selon l'une quelconque des revendications 1 à 3, comprenant en outre un boulon (17) déplaçable vers une position fonctionnelle pour empêcher la rétraction de la barre dans sa position rentrée, et dans lequel le verrou (18) est conçu pour verrouiller le boulon (17) dans sa position fonctionnelle.

5. Dispositif selon la revendication 4, dans lequel le boulon est également adapté pour limiter le déplacement du second élément de type segment à partir de sa position fonctionnelle.

6. Dispositif selon l'une quelconque des revendications 4 ou 5, dans lequel le second élément de type segment comporte, à une extrémité, un crochet (15) conçu pour passer à travers une ouverture (16) dans le logement (2), et qui est adapté pour mettre en prise le boulon (17) lorsque ce dernier est empêché d'effectuer la rétraction de la barre de façon à limiter le déplacement du second élément de type segment (3).
